# EUROPEAN PATENT APPLICATION

(11) **EP 3 872 622 A2**
(43) Date of publication of application: **01.09.2021**
(21) Application number: 20216234.3
(22) Date of filing: 21.12.2020
(51) Int. Cl.: G06F 8/33, G06F 9/445

(54) **APPLICATION FRAMEWORK DEVELOPER TOOL**

(30) Priority: 26.02.2020 US 202016801786
(71) Applicant: Red Hat, Inc., Raleigh, North Carolina 27601 (US)
(72) Inventor: DOUGLAS, Stuart, Raleigh, North Carolina 27601 (US); ESCOFFIER, Clement, Raleigh, North Carolina 27601 (US)
(74) Representative: Murgitroyd & Company

(57) **Abstract**

A system includes a memory and a processor in communication with the memory. The processor is configured to create an application with a framework including a plurality of related classes, where the developer tools are installed with the framework. Using a searchable interface for finding developer tools, the processor is configured to access an interface to the developer tools to find a developer tool and configure the developer tool to create a configured implementation for use in the application.

## Description

### BACKGROUND

Computer systems may run applications or services that are provided via a server or cloud. The applications or services can be developed and deployed at runtime. Application instances or services may run within containers, which may be run on physical or virtual machines. The containers may be used to separate various components of a computing system. For example, different components of a computing system may be executed at different containers and/or virtual machines executing on a computing device.

The containers may encapsulate a runtime environment for an application instance or service. Application instances may be started or replicated across nodes and each application instance may require configuration objects (e.g., lists, collections, arrays, etc. used for configuration), classes, artifacts, dependencies, annotations, libraries, etc. to be loaded at various times.

### SUMMARY

The present disclosure provides new and innovative systems and methods for providing an application framework developer tool. In an example, a method includes creating an application with a framework including a plurality of related classes. The developer tools are installed with the framework. The method also includes accessing an interface to the developer tools to find a developer tool, where the developer tools are searchable through the interface. The method also includes configuring the developer tool to create a configured implementation for use in the application. A computer program comprising instructions which, when the program is executed by a computer, cause the computer to carry out the steps of the above method, is also provided.

In an example, a system includes a memory and a processor in communication with the memory. The processor is configured to create an application with a framework including a plurality of related classes. The developer tools are installed with the framework. The processor is further configured to access an interface to the developer tools to find a developer tool, where the developer tools are searchable through the interface. The processor is further configured to configure the developer tool to create a configured implementation for use in the application.

In an example, a system includes a distribution server having a distribution package. The system also includes a local computer including a processor, memory, and storage, where the local computer is in communication with the distribution server. The system also includes program logic encoded in memory of the local computer configured for the execution of retrieving a distribution package from a distribution server. The distribution package including a framework, developer tools associated with the framework, and an interface. The program logic is further configured to execute installing the distribution package on the local computer and providing access to the framework and the interface.

Additional features and advantages of the disclosed method and apparatus are described in, and will be apparent from, the following Detailed Description and the Figures. The features and advantages described herein are not all-inclusive and, in particular, many additional features and advantages will be apparent to one of ordinary skill in the art in view of the figures and description. Moreover, it should be noted that the language used in the specification has been principally selected for readability and instructional purposes, and not to limit the scope of the inventive subject matter.

### BRIEF DESCRIPTION OF THE FIGURES

Fig. 1 illustrates a block diagram of an example computing system according to an example embodiment of the present disclosure.
Fig. 2 illustrates a flowchart of an example method for developing an application using tooling provided with a framework according to an example embodiment of the present disclosure.
Fig. 3 illustrates a flowchart of an example method of obtaining access to a framework and interface for developing an application, in accordance with an embodiment of the present disclosure.
Fig. 4 illustrates a flow diagram of an example method of using an interface to retrieve extensions when developing an application, in accordance with an embodiment of the present disclosure.
Fig. 5 illustrates a flow diagram of an example method of using an interface to use developer tools installed with a framework, when developing an application, according to an example embodiment of the present disclosure.
Fig. 6 illustrates a block diagram of an example system for developing applications using a framework and associated interface according to an example embodiment of the present disclosure.
Fig. 7 illustrates a block diagram of an example of a local computer developing applications using a framework and associated interface according to an example embodiment of the present disclosure.

### DETAILED DESCRIPTION

Techniques are disclosed for providing developer tooling to facilitate use of an application framework when developing applications. Bundling developer created tools, i.e., tooling, directly with an application framework, as well as a searchable interface, provides an application framework configured to more quickly build a wide variety of different types of applications. Including appropriate versions of developer tools with the application framework facilitates usability of the framework. Specifically, if most useful developer tools are installed along with the application framework, the latest updates and technologies included in the application framework can be quickly implemented and optimized in an application.

Traditionally, for Java frameworks and servers, developer tools are provided through implementation of plugins for various integrated development environments (IDEs) or build tools (i.e., Apache Ant, Apache Maven, or Gradle). However, current methods of providing developer tools introduces complications to the developer tool deployment process. First, a different implementation of every developer tool may be required for every IDE and build tool supported. Each developer tool is designed and configured specifically to work with an Application Programming Interface (API) and workspace abstractions of a given IDE and/or build tool. Generally, this means that developers of an application framework need to implement abstractions and adaptations for each IDE, or build tool, that is supported. Second, as new versions of an application framework are released, developer tools / tooling can quickly become out of sync with a framework. Typically, frameworks are updated multiple times a year, necessitating that the latest tooling being updated on the same timeline. In some instances, a framework may be updated every few weeks, which further complicates synchronizing the latest tooling for each type of IDE and/or build tools. Additionally, older versions of developer tools / tooling may not support newer features of an application framework and may not be fully compatible with newer versions of the framework.

Additionally, typically, developer tools are limited to a single part of the development cycle, such as scaffolding or delivery, and limited in their implementation (i.e., maven, JBoss, Atomist, and JHipster). Generally, once a project for an application is created, additional extensions can only be added by recreating the project. Further, generally, current implementations of developer tools do not provide more than the implementation itself and do not provide guidance or recommendations as to how to implement or optimize a framework. Thus, there is a need for a new paradigm of creating and updating developer tools / tooling.

As described in various embodiments disclosed herein, providing an improved application framework and developer tools, the systems and methods disclosed herein advantageously bundled into a package, that includes an application framework with tooling and a developer console specifically designed for use with the application framework. The package contains an application framework, developer tools / tooling, and a developer console together on a computer system. In some embodiments, a computer system can include an application server. In other embodiments, a computer system can include a developer's local computer, such as a desktop computer or a laptop computer. The developer console is configured to provide a web interface, via a web server, for ease of use and a command line interface (CLI) to enable use with automation tools. The developer console provides a searchable interface for each developer tool / tooling installed on the computer system. In some embodiments, the developer console may be used to search for other extensions and/or developer tools installed to work with the application framework. In various embodiments, a developer console is an interface to developer tools / tooling and extensions that facilitate implementation and optimization of an application framework.

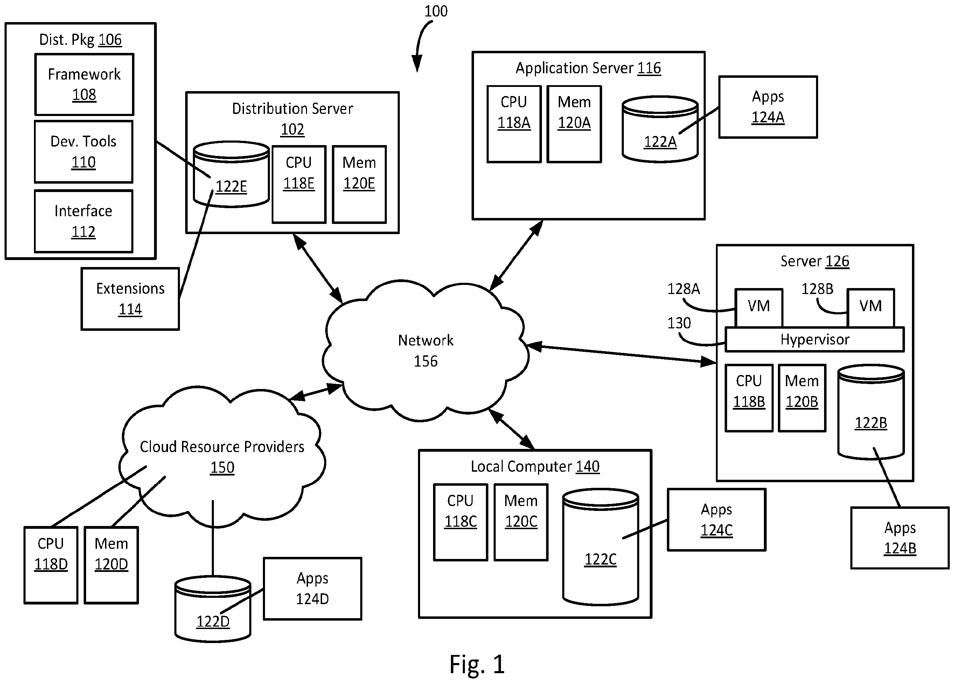

Fig. 1 is a simplified block diagram of an example computing system 100 in accordance with one or more aspects of the present disclosure. As shown, the computer system 100 can include an application server 116, server 126, local computer 140, a cloud resource provider 150, a distribution server 102, and combinations thereof, in communication through a network 156. Each of the systems within computing system 100 includes storage (122A-E, 122 generally), a CPU (118A-E, 118 generally), and memory (120A-E, 120 generally) and each of the systems are in communication with network 156, which connects each system to every other system within computing system 100.

In Fig. 1, the distribution server 102 stores distribution package 106 and extensions 114 on storage 122E located within the distribution server 102. The distribution server 102 is enabled to provide the distribution package 106 and extensions 114 to various systems within the computing system 100, such as the application server 116, server 126, local computer 140, and cloud resource providers 150. For example, the application server 116 can install the distribution package 106 on storage 122A and provide access to the framework 108, development tools 110, and interface to virtual machines (128A-128B, 128 Generally) hosted on hypervisor 130 on server 126, local computer 140, or to cloud resource provider 150. In other embodiments, Application development and storage of the framework 108, development tools 110, and interface 112 can be installed and used locally, such as on the cloud resource provider 150, local computer 140, or server 126.

The distribution package 106 includes a framework 108, developer tools 110 (i.e., tooling), and an interface 112. The framework 108 is a large body of related prewritten code. An extension 114 (e.g., a CDI portable extension) is a construct that provides the capability to modify, update, and/or extend capabilities of a framework 108 that often come with their own specific developer tools. Developer tools 110, sometimes called tooling, are developer created tools to facilitate efficient application development. In many instances, developer tools may include easily configurable source code and/or modules capable of being inserted within an application. In some instances, developer tools may include automation and configuration tools to simplify development, testing, and/or deployment of an application.

The interface 112 is constructed and configured to provide a web interface and a command line interface (CLI) through which a user can search for, use, and configure developer tools and extensions. For example, a user can use the interface 112 to search for a developer tool to help with various tasks, such as implementing a container within the framework 108. The user finds the appropriate developer tool within the interface 112, which is enabled to configure the container into a configured implementation of a container. In some instances, the interface 112 is enabled to analyze the application 124 to determine one or more potential locations, within the application source code, to place the configured implementation of the container. Alternatively, in another example, a user is capable of searching for extensions via the interface 112. If the specific extension is not located locally, the interface 112 is enabled to retrieve the extension from a distribution server 102. In some embodiments, the interface 112 is also capable of determining which dependencies may be needed by a downloaded extension and resolve the dependencies of the downloaded extension.

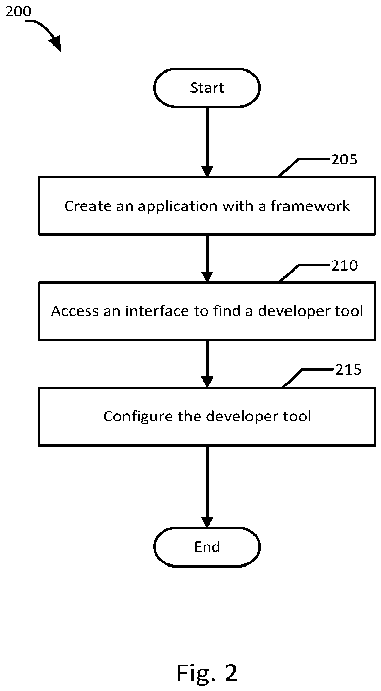

Fig. 2 illustrates a flowchart of an example method 200 for developing an application using tooling provided with the framework, in accordance with an embodiment of the present disclosure. Although the example method 200 is described with reference to the flowchart illustrated in Fig. 2, it will be appreciated that many other methods of performing the acts associated with the method 200 may be used. For example, the order of some of the blocks may be changed, certain blocks may be combined with other blocks, blocks may be repeated and some of the blocks described are optional. The method 200 may be performed by processing logic that may comprise hardware (circuitry, dedicated logic, etc.), software, or a combination of both.

The example method 200 includes creating an application with a framework (block 205). For example, a framework 108 provides a scaffolding used to create an application. The framework 108 may include a plurality of related classes. The developer tools 110 may be installed with the framework 108. Next, the example method 200 includes accessing an interface to find a developer tool (block 210). For example, the interface 112 provides a web portal and CLI through which a user or developer can search for developer tools 110 and other related information to facilitate and /or speed up development of an application using the framework 108. In various embodiments, developer tools, or tooling, may include configuration tools, documentation, specific implementations or configurations of classes, automation tools, and other implements to simplify and accelerate development of an application. In some embodiments, a developer tool may be a plugin. In other embodiments, a developer tool may be an extension. In some instances, a developer tool may be installable via the interface 112. Next, the example method 200 includes configuring the developer tool (block 215). For example, in one embodiment, the developer tool 110 may be configured to create a configured implementation for use in the application 124. In another example, a user or developer searches for an example implementation of a container using the interface. In this way, the user or developer is capable of configuring the example implementation of the container to create a configured implementation that can be incorporated within the application. For example, a configured implementation may be a fully configured container, where suggested options and/or settings are pre-configured by a development tool.

In various embodiments, an interface is capable of incorporating a configured implementation within source code of an application. For example, once the interface 112 finds a development tool 110, the interface 112 may parse the source code of an application to identify a structure of the application. The interface may search the structure of the application to determine at least one location within the source code of the application to include the configured implementation. The interface may provide at least one location within the source code that may be selected for placement of the configured implementation.

In many embodiments, an interface may facilitate building an application by removing extraneous functions and/or tools. For example, an interface 112 may implement one or more development tools 110 within an application 124 during development to support debugging and testing of the application 124. However, during deployment of the application 124, the interface 112 may remove access to developer tools 110 incorporated within an application 124, as they are unneeded and may potentially compromise the security of the application 124.

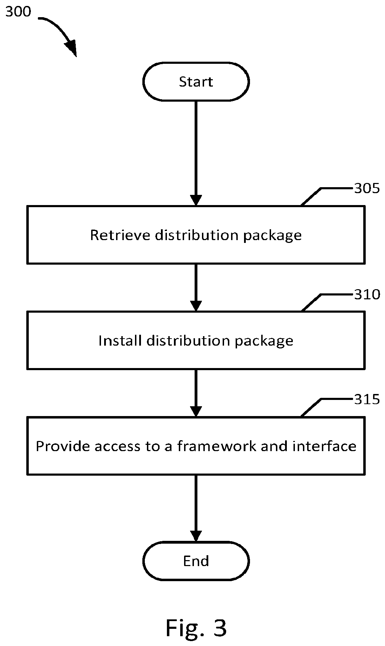

Fig. 3 illustrates a flowchart of an example method 300 of obtaining access to a framework and interface for developing an application. Although the example method 300 is described with reference to the flowchart illustrated in Fig. 3, it will be appreciated that many other methods of performing the acts associated with the method 300 may be used. For example, the order of some of the blocks may be changed, certain blocks may be combined with other blocks, blocks may be repeated and some of the blocks described are optional. The method 300 may be performed by processing logic that may comprise hardware (circuitry, dedicated logic, etc.), software, or a combination of both.

The example method 300 includes retrieving a distribution package (block 305). For example, a local computer 140 may retrieve a distribution package 106 from the distribution server 102. A local computer 140 may send a request to the distribution server 102 to retrieve the distribution package 106. Upon receiving the request, the distribution server 102 sends the distribution package to the local computer 140. Next, the example method 300 includes installing the distribution package (block 310). For example, once receiving the distribution package 106 at local computer 140, the local computer 140 installs the framework 108, developer tools 110, and interface 112. In some embodiments, a web server is installed with the interface 112 to provide a web interface and a command line interface to access the interface 112.

The example method 300 also includes providing access to a framework and interface (block 315). For example, the local computer 140 provides access to the interface 112 through the web interface and command line interface. The interface 112 provides a searchable access to each of the developer tools 110 installed on the local computer 140. In various embodiments, the interface can be used to add more extensions to an application. For example, an interface 112 can receive a request to add one or more extensions 114. The interface 112 sends a request to the distribution server 102 to request the one or more extensions 114. The distribution server 102 searches for the requested extensions 114 and sends them to the local computer 140. Once the local computer 140 retrieves the requested extensions, the local computer 140 resolves any dependencies of the extensions. Next, the interfaces 112 registers the developer tools 110 and extensions 114 associated with the dependencies.

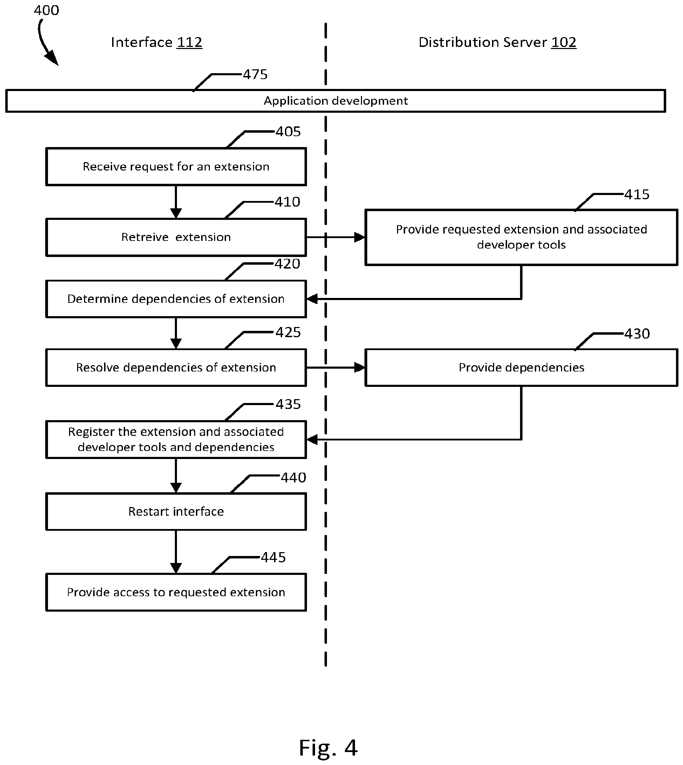

Fig. 4 illustrates a flow diagram of an example method 400 of using an interface, installed with a framework, when developing an application, in accordance with an example embodiment of the present disclosure. Although the example method 400 is described with reference to the flow diagram illustrated in Fig. 4, it will be appreciated that many other methods of performing the acts associated with the method 400 may be used. For example, the order of some of the blocks may be changed, certain blocks may be combined with other blocks, blocks may be repeated, and some of the blocks described are optional. For example, in the illustrated flow diagram, interface 112 is communicating with the distribution server 102 during application development 475.

The example method 400 includes receiving a request for an extension (block 405). For example, the interface 112 receives a request for an extension 114 located on the distribution server 102. In various embodiments, the extension may be located on any distribution server providing for deployment of frameworks and/or extensions. Next, the example method 400 includes retrieving an extension (block 410). In this instance, for example, the interface 112 attempts to retrieve the requested extension from the distribution server 102. The example method 400 also includes providing requested extension and associated developer tools (block 415). For example, the distribution server 102 searches for the requested extension 114 and provides the requested extension 114 and associated developer tools to the interface 112. The example method 400 includes determining dependencies of the extension (block 420). For example, once receiving the extension and the associated developer tools, the interface 112 determines whether the extension 114 has any dependencies. The example method 400 includes resolving dependencies of the extension (block 425). For example, if any dependencies exist, the interface 112 resolves the dependencies from the distribution server 102 by retrieving dependencies for each extension 114 retrieved by the interface 112. Next, the example method 400 includes providing dependencies (block 430). For example, the distribution server 102 provides any requested dependencies to the interface 112. The example method includes registering the extension and associated developer tools and dependencies (block 435). For example, upon receiving the requested dependencies, the interface 112 registers the received extension 114 and associated developer tools and dependencies. In various embodiments, upon registration of an extension and associated developer tools, an interface is enabled to provide access to an extension, associated developer tools, and any dependencies upon which the extension or the associated developer tools rely upon. Next, the example method 400 includes restarting the interface. For example, to incorporate any changes into a database of information known by the interface 112, the interface 112 restarts. The method 400 also includes providing access to requested extensions (block 445). For example, once the interface 112 restarts, the interface is able to provide access to the requested extension and associated developer tools and any dependencies.

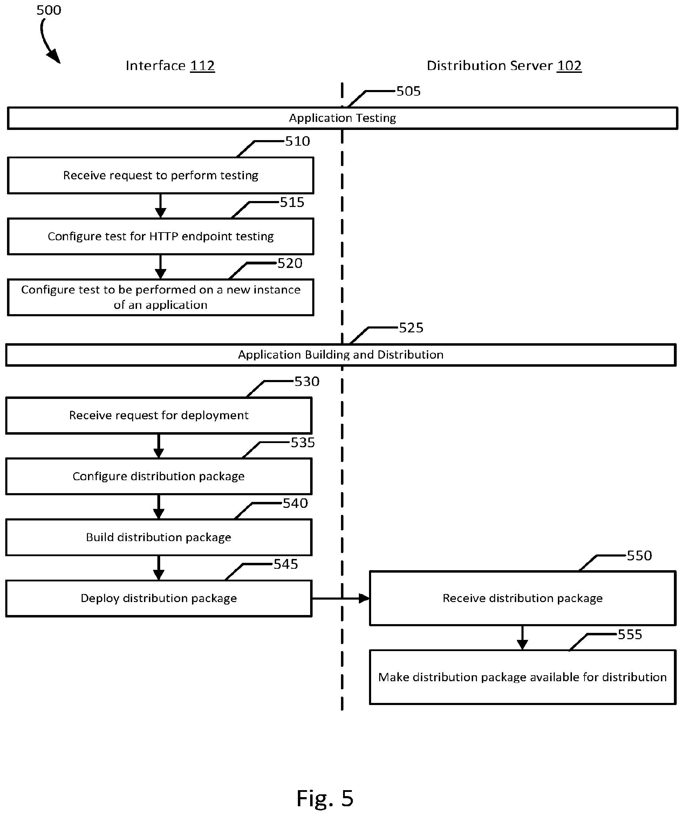

Fig. 5 illustrates a flowchart of example methods 500 of using an interface to use tooling, installed with a framework, when developing an application, in accordance with an example embodiment of the present disclosure. Although the example method 500 is described with reference to the flowchart illustrated in Fig. 5, it will be appreciated that many other methods of performing the acts associated with the method 500 may be used. For example, the order of some of the blocks may be changed, certain blocks ma be combined with other blocks, blocks may be repeated, and some of the blocks described are optional. For example, the interface installed on the local computer 140 and the distribution server 102 are in communication during the methods 500 which include application testing 505 and application building and distribution 520.

The example method 500 includes initiating application testing (block 505). For example, the interface 112 is capable of performing various types of testing, such as, but not limited to, endpoint testing, module testing, and other testing as needed. The example method 500 includes receiving a request to perform testing (block 510). For example, interface 112 is capable of receiving requests to perform testing. The interface 112 may be configured to perform various types of testing depending on which developer tools 110 are available. Next the example method 500 includes configuring test for HTTP endpoint testing (block 515). For example, the interface 112 determines from input parameters which type of testing to perform. In this instance, the interface 112 has received parameters to configure HTTP endpoint testing on the application 124. Next the method 500 includes configuring test to be performed on a new instance of an application (block 520). For example, the interface 112 further configures the testing developer tool to perform the test on a new instance of the application. In some embodiments, an interface 112 is capable of configuring a developer tool to perform testing on the same application multiple times.

The example method 500 includes the capability of application building and distribution (block 525). For example, the interface 112 is capable of building an application and deploying the application using a tool such as kubernetes. The example method 500 includes receiving a request for deployment (block 530). For example, the interface 112 may receive requests to deploy an application. The interface 112 may search for and utilize one or more development tools to build and distribute an application. The method 500 includes configuring a distribution package (block 535). For example, once a development tool is chosen for building the distribution package, the interface 112 configures the development tool to crate the distribution package. The method 500 includes building the distribution package (block 540). For example, the interface 112 uses the developer tool to build the distribution package according to the configured parameters. Next, the method 500 also includes deploying the distribution package (block 545). For example, once the distribution package has been created, the interface 112 deploys the distribution package to the distribution server 102. The method 500 also includes receiving the distribution package (block 550). The method 500 also includes making the distribution package available for distribution (block 555). For example, upon receiving the distribution package, the distribution server 102 makes the distribution package available for distribution.

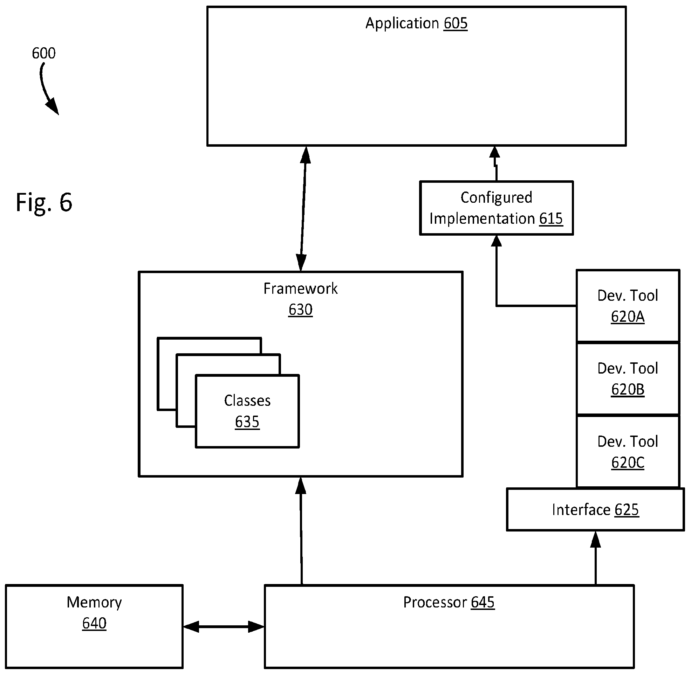

Fig. 6 is a block diagram of an example of a system 600 for developing applications using a framework and associated interface according to an example embodiment of the present disclosure. The system 600 includes a processor 645 in communication with memory 640. The processor 645 may create an application 605 using framework 630, where the framework 630 includes a plurality of related classes 635. Developer tools (620A-C, 620 generally) may be installed with the framework 630 The processor 645 may access an interface 625 to developer tools 620, which are searchable through the interface 625, to find a developer tool 620. The processor may configure the developer tool 620 to create a configured implementation 615 for use in the application 605.

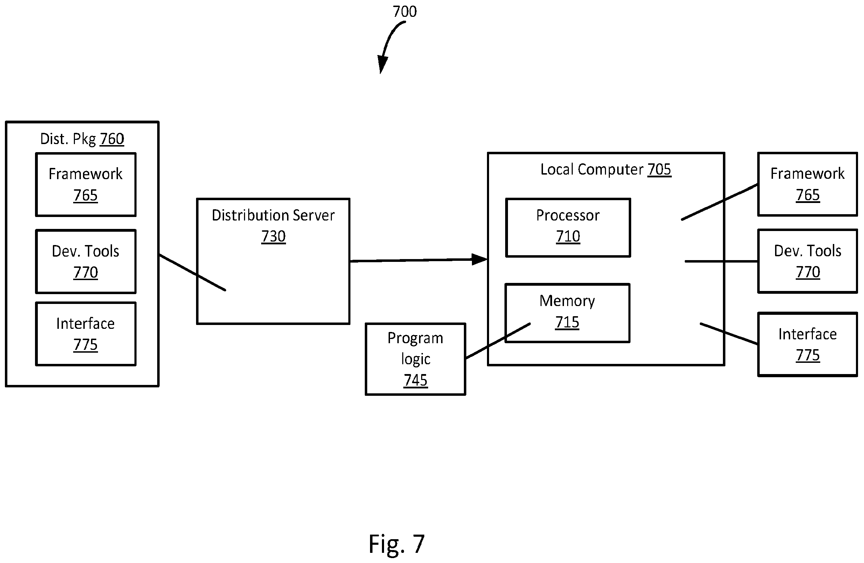

Fig. 7 is a block diagram of a system 700 including an example of an local computer 705 developing applications using a framework and associated developer tools retrieved from a distribution server 730, according an example embodiment of the present disclosure. As shown, the local computer 705 includes a processor 710 and memory 715. The local computer 705 is in communication with a distribution server 730, which includes a distribution package 760 that includes a framework 730. The local computer 705 includes program logic 745 encoded in memory 715. The local computer 705 is configured to retrieve a distribution package 760 from distribution server 730. The distribution package 760, which is kept within distribution server 730, includes a framework 765, development tools 770, and interface 775. The local computer 705 installs the distribution package locally and provides access to the framework 765 and the interface 775 to users of the local computer 705. The interface 774 provides searchable access to the developer tools 770 for use in developing the application 725.

It will be appreciated that all of the disclosed methods and procedures described herein can be implemented using one or more computer programs or components. These components may be provided as a series of computer instructions on any conventional computer readable medium or machine readable medium, including volatile or non-volatile memory, such as RAM, ROM, flash memory, magnetic or optical disks, optical memory, or other storage media. The instructions may be provided as software or firmware, and/or may be implemented in whole or in part in hardware components such as ASICs, FPGAs, DSPs or any other similar devices. The instructions may be configured to be executed by one or more processors, which when executing the series of computer instructions, performs or facilitates the performance of all or part of the disclosed methods and procedures.

Aspects of the subject matter described herein may be useful alone or in combination with one or more other aspects described herein. In a 1st exemplary aspect of the present disclosure, a method includes creating an application with a framework including a plurality of related classes, wherein developer tools are installed with the framework. The method also includes accessing an interface to the developer tools to find a developer tool, wherein the developer tools are searchable through the interface. The method further includes configuring the developer tool to create a configured implementation for use in the application.

In a 2nd exemplary aspect of the present disclosure, which may be used in combination with any one of more of the preceding aspects (i.e., the 1st aspect), the method further includes incorporating the configured implementation within source code of the application.

In a 3rd exemplary aspect of the present disclosure which may be used in combination with any one of more of the preceding aspects (i.e., the 2st aspect), incorporating comprises parsing the source code of the application to identify a structure of the application. Incorporating further comprises searching the structure of the application to determine at least one location within the source code of the application to include the configured implementation. Additionally, incorporating comprises providing a user the at least one location within the source code for selection.

In a 4th exemplary aspect of the present disclosure which may be used in combination with any one of more of the preceding aspects (i.e., the 3st aspect), incorporating further includes upon receiving the user selection, placing the configured implementation within the source code of the application at the selected location. Additionally, incorporating includes resolving any dependencies created by placing the configured implementation. Additionally, incorporating further includes registering, via the interface, developer tools associated with the dependencies.

In a 5th exemplary aspect of the present disclosure which may be used in combination with any one of more of the preceding aspects (i.e., the 1st aspect), the developer tool is a plugin.

In a 6th exemplary aspect of the present disclosure which may be used in combination with any one of more of the preceding aspects (i.e., the 1st aspect), the developer tool is an extension.

In a 7th exemplary aspect of the present disclosure which may be used in combination with any one of more of the preceding aspects (i.e., the 1st aspect), the developer tool is installable via the interface.

In a 8th exemplary aspect of the present disclosure which may be used in combination with any one of more of the preceding aspects (i.e., the 1st aspect), the method also includes building a production build of the application, which removes access to provisioned developer tools from the application.

In a 9th exemplary aspect of the present disclosure which may be used in combination with any one of more of the preceding aspects (i.e., the 1st aspect), the method also includes building a container for deployment of the application, wherein the building the container removes the developer tool from the application. The method further includes deploying the container.

In a 10th exemplary aspect of the present disclosure which may be used in combination with any one of more of the preceding aspects (i.e., the 1st aspect), the method includes where the developer tool is configured to provide a scaffolding for the application.

In a 11th exemplary aspect of the present disclosure which may be used in combination with any one of more of the preceding aspects (i.e., the 1st aspect), the method includes where the developer tool is for configuring an installation package for the application.

In a 12th exemplary aspect of the present disclosure which may be used in combination with any one of more of the preceding aspects (i.e., the 1st aspect), the method includes where the developer tool is for creating entities within the framework for use in the application.

In a 13th exemplary aspect of the present disclosure which may be used in combination with any one of more of the preceding aspects (i.e., the 1st aspect), the method includes where the developer tool is for running a test on the application;

In a 14th exemplary aspect of the present disclosure which may be used in combination with any one of more of the preceding aspects (i.e., the 1st aspect), the method includes where the developer tool runs testing automation on a new instantiation of the application.

In a 15th exemplary aspect of the present disclosure which may be used in combination with any one of more of the preceding aspects (i.e., the 1st aspect), the method includes where the interface includes a web interface and a command line interface (CLI).

Aspects of the subject matter described herein may be useful alone or in combination with one or more other aspects described herein. In a 16th exemplary aspect of the present disclosure a system includes a memory and a processor in communication with the memory. The processor is configured to create an application with a framework including a plurality of related classes, wherein developer tools are installed with the framework. The processor is also configured to access an interface to the developer tools to find a developer tool, wherein the developer tools are searchable through the interface. The processor is further configured to configure the developer tool to create a configured implementation for use in the application.

In a 17th exemplary aspect of the present disclosure, which may be used in combination with any one or more of the preceding aspects (i.e., the 16th aspect), the processor is further configured to incorporate the configured implementation within source code of the application.

In an 18th exemplary aspect of the present disclosure, which may be used in combination with any one or more of the preceding aspects (i.e., the 17th aspect), where incorporating comprises parsing the source code of the application to identify a structure of the application. Incorporating further includes searching the structure of the application to determine at least one location within the source code of the application to include the configured implementation. Incorporating further includes providing a user the at least one location within the source code for selection.

In an 19th exemplary aspect of the present disclosure, which may be used in combination with any one or more of the preceding aspects (i.e., the 18th aspect), where incorporating further comprises upon receiving the user selection, placing the configured implementation within the source code of the application at the selected location. Incorporating further comprises resolving any dependencies created by placing the configured implementation. Additionally, incorporating further includes registering, via the interface, developer tools associated with the dependencies.

In a 20th exemplary aspect of the present disclosure, which may be used in combination with any one or more of the preceding aspects (i.e., the 16th aspect), the developer tool is a plugin.

In a 21th exemplary aspect of the present disclosure, which may be used in combination with any one or more of the preceding aspects (i.e., the 16th aspect), the developer tool is an extension.

In a 22th exemplary aspect of the present disclosure, which may be used in combination with any one or more of the preceding aspects (i.e., the 16th aspect), the developer tool is installable via the interface.

In a 23th exemplary aspect of the present disclosure, which may be used in combination with any one or more of the preceding aspects (i.e., the 16th aspect), the processor is configured to perform building a production build of the application, which removes access to provisioned developer tools from the application.

In a 24th exemplary aspect of the present disclosure, which may be used in combination with any one or more of the preceding aspects (i.e., the 16th aspect), the processor is configured to perform building a container for deployment of the application, wherein the building the container removes the developer tool from the application. The processor is further configured to perform deploying the container.

In a 25th exemplary aspect of the present disclosure, which may be used in combination with any one or more of the preceding aspects (i.e., the 16th aspect), where the developer tool is configured to provide a scaffolding for the application.

In a 26th exemplary aspect of the present disclosure, which may be used in combination with any one or more of the preceding aspects (i.e., the 16th aspect), where the developer tool is for configuring an installation package for the application.

In a 27th exemplary aspect of the present disclosure, which may be used in combination with any one or more of the preceding aspects (i.e., the 16th aspect), where the developer tool is for creating entities within the framework for use in the application.

In a 28th exemplary aspect of the present disclosure, which may be used in combination with any one or more of the preceding aspects (i.e., the 16th aspect), where the developer tool is for running a test on the application.

In a 29th exemplary aspect of the present disclosure, which may be used in combination with any one or more of the preceding aspects (i.e., the 16th aspect), where the developer tool runs testing automation on a new instantiation of the application.

In a 30th exemplary aspect of the present disclosure, which may be used in combination with any one or more of the preceding aspects (i.e., the 16th aspect), where the interface includes a web interface and a command line interface (CLI).

Aspects of the subject matter described herein may be useful alone or in combination with one or more other aspects described herein. In a 31st exemplary aspect of the present disclosure, a non-transitory machine readable medium storing code, which when executed by a processor is configured to create an application with a framework including a plurality of related classes, where developer tools are installed with the framework. The code, when executed by a processor, is further configured to access an interface to the developer tools to find a developer tool, where the developer tools are searchable through the interface. The code, when executed by a processor, is further configured to configure the developer tool to create a configured implementation for use in the application.

In a 32th exemplary aspect of the present disclosure, which may be used in combination with any one or more of the preceding aspects (i.e., the 31th aspect), the code, when executed by a processor, is configured to incorporate the configured implementation within source code of the application.

In a 33th exemplary aspect of the present disclosure, which may be used in combination with any one or more of the preceding aspects (i.e., the 31th aspect), where incorporating further includes parse the source code of the application to identify a structure of the application. Incorporating also includes searching the structure of the application to determine at least one location within the source code of the application to include the configured implementation. Additionally, incorporating also includes providing a user the at least one location within the source code for selection.

In a 34th exemplary aspect of the present disclosure, which may be used in combination with any one or more of the preceding aspects (i.e., the 33th aspect), where incorporating includes upon receiving the user selection, place the configured implementation within the source code of the application at the selected location. Incorporating further includes resolving any dependencies created by placing the configured implementation. Additionally, incorporating includes registering, via the interface, developer tools associated with the dependencies.

In a 35th exemplary aspect of the present disclosure, which may be used in combination with any one or more of the preceding aspects (i.e., the 31th aspect), where the developer tool is a plugin.

In a 36th exemplary aspect of the present disclosure, which may be used in combination with any one or more of the preceding aspects (i.e., the 31th aspect), where the developer tool is an extension.

In a 37th exemplary aspect of the present disclosure, which may be used in combination with any one or more of the preceding aspects (i.e., the 31th aspect),where the developer tool is installable via the interface.

In a 38th exemplary aspect of the present disclosure, which may be used in combination with any one or more of the preceding aspects (i.e., the 31th aspect), where the code, when executed by a processor, is configured to build a production build of the application, which removes access to provisioned developer tools from the application.

In a 39th exemplary aspect of the present disclosure, which may be used in combination with any one or more of the preceding aspects (i.e., the 31th aspect), where the code, when executed by a processor, is configured to build a container for deployment of the application, wherein the building the container removes the developer tool from the application. Additionally, the code, when executed by a processor is configured to deploy the container.

In a 40th exemplary aspect of the present disclosure, which may be used in combination with any one or more of the preceding aspects (i.e., the 31th aspect), where the developer tool is configured to provide a scaffolding for the application.

In a 41th exemplary aspect of the present disclosure, which may be used in combination with any one or more of the preceding aspects (i.e., the 31th aspect), where the developer tool is for configuring an installation package for the application.

In a 42th exemplary aspect of the present disclosure, which may be used in combination with any one or more of the preceding aspects (i.e., the 31th aspect), where the developer tool is for creating entities within the framework for use in the application.

In a 43th exemplary aspect of the present disclosure, which may be used in combination with any one or more of the preceding aspects (i.e., the 31th aspect), where the developer tool is for running a test on the application.

In a 44th exemplary aspect of the present disclosure, which may be used in combination with any one or more of the preceding aspects (i.e., the 31th aspect), where the developer tool runs testing automation on a new instantiation of the application.

In a 45th exemplary aspect of the present disclosure, which may be used in combination with any one or more of the preceding aspects (i.e., the 31th aspect), where the interface includes a web interface and a command line interface (CLI).

Aspects of the subject matter described herein may be useful alone or in combination with one or more other aspects described herein. In a 46th exemplary aspect of the present disclosure, a system includes a means for creating an application with a framework including a plurality of related classes, wherein developer tools are installed with the framework. A system also includes a means for accessing an interface to the developer tools to find a developer tool, wherein the developer tools are searchable through the interface. A system further includes a means for configuring the developer tool to create a configured implementation for use in the application.

Aspects of the subject matter described herein may be useful alone or in combination with one or more other aspects described herein. In a 47th exemplary aspect of the present disclosure, a system includes a distribution server having a distribution package, wherein the distribution package includes a framework. The system also includes a local computer including a processor , memory, and storage, wherein the local computer is in communication with the distribution server. The system further includes computer-executable program logic, encoded in the memory of the local computer, where the computer-executable program logic is configured for the execution of retrieving a distribution package from a distribution server, wherein the distribution package includes the framework, developer tools associated with the framework, and an interface. The system further includes computer-executable program logic configured for the execution of installing the distribution package on the local computer. The system further includes computer-executable program logic configured for the execution of providing access to the framework and the interface, wherein the interface provides searchable access to the developer tools.

In a 48th exemplary aspect of the present disclosure, which may be used in combination with any one or more of the preceding aspects (i.e., the 47th aspect), where installing the distribution package includes installing the framework, developer tools, and the interface on the application server. Installing the distribution package further includes configuring the interface to provide a web interface and a command line interface (CLI).

In a 49th exemplary aspect of the present disclosure, which may be used in combination with any one or more of the preceding aspects (i.e., the 47th aspect), where the computer-executable program logic is further configured for the execution of receiving a request to add one or more extensions. The computer-executable program logic is further configured for the execution of retrieving the one or more extensions. The computer-executable program logic is further configured for the execution of resolving dependencies of each of the one or more extensions. Additionally, the computer-executable program logic is further configured for the execution of registering, via the interface, developer tools associated with each of the dependencies.

In a 50th exemplary aspect of the present disclosure, which may be used in combination with any one or more of the preceding aspects (i.e., the 47th aspect), where the computer-executable program logic is further configured for the execution of receiving, via the interface, a selection of a first developer tool constructed to configure deployment of an application, configuring the deployment of the application via the first developer tool, and deploying the application.

Aspects of the subject matter described herein may be useful alone or in combination with one or more other aspects described herein. In a 51th exemplary aspect of the present disclosure, a method includes retrieving a distribution package from a distribution server, wherein the distribution package includes the framework, developer tools associated with the framework, and an interface, installing the distribution package, and providing access to the framework and the interface, wherein the interface provides searchable access to the developer tools.

In a 52th exemplary aspect of the present disclosure, which may be used in combination with any one or more of the preceding aspects (i.e., the 51th aspect), the method, where installing the distribution package includes installing the framework, developer tools, and the interface and configuring the interface to provide a web interface and a command line interface (CLI).

In a 53th exemplary aspect of the present disclosure, which may be used in combination with any one or more of the preceding aspects (i.e., the 51th aspect), the method further including receiving a request to add one or more extensions, retrieving the one or more extensions, resolving dependencies of each of the one or more extensions, and registering, via the interface, developer tools associated with each of the dependencies.

In a 54th exemplary aspect of the present disclosure, which may be used in combination with any one or more of the preceding aspects (i.e., the 51th aspect), the method including receiving, via the interface, a selection of a first developer tool constructed to configure deployment of an application, configuring the deployment of the application via the first developer tool, and deploying the application.

Aspects of the subject matter described herein may be useful alone or in combination with one or more other aspects described herein. In a 55th exemplary aspect of the present disclosure, a non-transitory machine readable medium storing code, which when executed by a processor is configured to retrieve a distribution package from a distribution server, wherein the distribution package includes the framework, developer tools associated with the framework, and an interface, install the distribution package, and provide access to the framework and the interface, wherein the interface provides searchable access to the developer tools.

In a 56th exemplary aspect of the present disclosure, which may be used in combination with any one or more of the preceding aspects (i.e., the 55th aspect), where installing the distribution package includes installing the framework, developer tools, and the interface and configuring the interface to provide a web interface and a command line interface (CLI).

In a 57th exemplary aspect of the present disclosure, which may be used in combination with any one or more of the preceding aspects (i.e., the 55th aspect), where the code, when executed by the processor, is further configured to receive a request to add one or more extensions, retrieve the one or more extensions, resolve dependencies of each of the one or more extensions, and register, via the interface, developer tools associated with each of the dependencies.

In a 58th exemplary aspect of the present disclosure, which may be used in combination with any one or more of the preceding aspects (i.e., the 55th aspect), where the code, when executed by the processor, is further configured to receive, via the interface, a selection of a first developer tool constructed to configure deployment of an application, configure the deployment of the application via the first developer tool, and deploy the application.

To the extent that any of these aspects are mutually exclusive, it should be understood that such mutual exclusivity shall not limit in any way the combination of such aspects with any other aspect whether or not such aspect is explicitly recited. Any of these aspects may be claimed, without limitation, as a system, method, apparatus, device, medium, etc.

It should be understood that various changes and modifications to the example embodiments described herein will be apparent to those skilled in the art. Such changes and modifications can be made without departing from the scope of the present subject matter and without diminishing its intended advantages. It is therefore intended that such changes and modifications be covered by the appended claims.

## Claims

1. A method, comprising:
creating an application with a framework including a plurality of related classes, wherein developer tools are installed with the framework;
accessing an interface to the developer tools to find a developer tool, wherein the developer tools are searchable through the interface; and
configuring the developer tool to create a configured implementation for use in the application.

2. The method of claim 1, further comprising:
incorporating the configured implementation within source code of the application.

3. The method of claim 2, wherein incorporating further comprises:
parsing the source code of the application to identify a structure of the application;
searching the structure of the application to determine at least one location within the source code of the application to include the configured implementation; and
providing a user the at least one location within the source code for selection.

4. The method of claim 3, wherein incorporating further comprises:
upon receiving the user selection, placing the configured implementation within the source code of the application at the selected location;
resolving any dependencies created by placing the configured implementation; and
registering, via the interface, developer tools associated with the dependencies.

5. The method of claim 1, wherein the developer tool is a plugin.

6. The method of claim 1, wherein the developer tool is an extension.

7. The method of claim 1, wherein the developer tool is installable via the interface

8. The method of claim 1, further comprising:
building a production build of the application, which removes access to provisioned developer tools from the application.

9. A system, comprising:
a memory; and
a processor in communication with the memory, wherein the processor is configured to perform the method steps of any preceding claims.

10. The system of claim 9, wherein the processor is further configured to perform:
building a container for deployment of the application, wherein the building the container removes the developer tool from the application; and
deploying the container.

11. A system, comprising:
a distribution server having a distribution package;
a local computer including a processor and memory, wherein the local computer is in communication with the distribution server; and
computer-executable program logic, encoded in the memory of the local computer, wherein the computer-executable program logic is configured for the execution of:
retrieving a distribution package from a distribution server, wherein the distribution package includes the framework, developer tools associated with the framework, and an interface;
installing the distribution package on the local computer; and
providing access to the framework and the interface, wherein the interface provides searchable access to the developer tools.

12. The system of claim 11, wherein installing the distribution package comprises:
installing the framework, developer tools, and the interface on the local computer; and
configuring the interface to provide a web interface and a command line interface (CLI).

13. The system of claim 11, wherein the computer-executable program logic is further configured for the execution of:
receiving a request to add one or more extensions;
retrieving the one or more extensions;
resolving dependencies of each of the one or more extensions; and
registering, via the interface, developer tools associated with each of the dependencies.

14. A computer program comprising instructions which, when the program is executed by a computer, cause the computer to carry out the steps of the method of any of claims 1-8.
